# EUROPEAN PATENT APPLICATION

(11) **EP 1 953 621 A1**
(43) Date of publication of application: **06.08.2008**
(21) Application number: 06823290.9
(22) Date of filing: 10.11.2006
(51) Int. Cl.: G06F 3/02, G06F 3/023, H01H 25/04, H01H 25/06

(54) **OPERATION INPUT DEVICE AND ELECTRONIC DEVICE USING THE SAME**

(30) Priority: 10.11.2005 JP 2005326162
(71) Applicant: OMRON CORPORATION, Kyoto-shi, Kyoto 600-8530 (JP)
(72) Inventor: ARIHARA, Takeshi, Kyoto-shi, Kyoto 600-8530 (JP)
(74) Representative: Brochard, Pascale
(86) International application number: PCT/JP2006/322468
(87) International publication number: WO 2007/055321

(57) **Abstract**

It is possible to provide a small-size operation input device which can easily be manufactured and an electronic device using it. The operation input device includes: a printed board (20) on the upper surface of which at least one push button switch (21) is mounted; an operation dial (70) supported above the printed board (20) in such a manner that it can rotate around a rotation shaft; a pushbutton (30) rotating as a unitary block at the center of the operation dial (70) and independently movable vertically; a plate-shaped magnet (34) provided on the pushbutton (30) and having at least a pair of magnetic poles arranged on the same axis as the rotation shaft and equally divided in star arrangement; and a magnetic field detection element (9) arranged below the pushbutton (30) so as to arrange a plurality of magnetic detection sensors around the rotation shaft at an equal interval.

## Description

### TECHNICAL FIELD

The present invention relates to an operation input device which can be applied to a cellular phone or a portable music player.

### BACKGROUND ART

Conventionally, as an input operation device for use in a cellular phone or the like, there has been an input operation device constituted by a base, a printed circuit board which has plural push button switches and a magnetic-field detection device mounted on an upper surface of the printed circuit board and is overlaid on and integrated with the base, an operation plate placed on the printed circuit board, and a disk-shaped operation dial assembled rotatably to the operation plate, wherein an annular magnet with N poles and S poles placed alternately therein is assembled to a lower surface of the disk-shaped operation dial. Further, the operation input device is adapted such that, if the operation dial is rotated, the change of magnetic fluxes from the annular magnet is detected and, thus, the direction of the rotation is detected by the magnetic-field detection device and, if the operation dial is pushed, the push button switches are operated (refer to Patent Document 1, for example).
Patent Document 1: Japanese Unexamined Patent Application Publication No. 2003-280799

### DISCLOSURE OF THE INVENTION

### PROBLEMS TO BE SOLVED BY THE INVENTION

However, the operation input device requires two magnetic-field detection devices for detecting the direction and the amount of the rotation of the operation dial. This configuration increases the number of components, which requires installation spaces for the components, thereby making it impossible to provide a smaller-size operation input device having a smaller bottom area. Accordingly, the operation input device can not be used in a cellular phone or the like which is desired to have a reduced size.

Further, when two rotation detecting devices are placed, it is necessary that the annular magnet is placed such that it passes thereabove. This configuration restricts the placement of the magnetic-field detection devices and, also, the annular magnet has a large diameter, thereby decreasing the degree of flexibility in designing. Further, the fabrication of the annular magnet involves a lot of efforts due to its shape and the circumstances of magnetization, thereby inducing the problem of lower productivity and higher costs.

It is an object of the present invention to provide a small-sized operation input device which is easy to product and an electronic device using the same, in view of the problem.

### MEANS FOR SOLVING THE PROBLEMS

An operation input device according to the present invention is constituted by a printed circuit board having at least one single push button switch mounted on an upper surface of the printed circuit board, an operation dial supported rotatably about a rotation axis above the printed circuit board, a push button which is rotated at the center of the operation dial integrally with the operation dial and is movable upwardly and downwardly independently, a plate-shaped magnet with at least a pair of magnetic poles evenly divided radially which is included in the push button and placed on an axis coincident with the rotation axis, and a magnetic-field detection device provided below the push button such that plural magnetic-field detection sensors therein are evenly placed about the rotation axis, wherein, if the operation dial is rotated, the magnetic-field detection device for detecting magnetic fluxes from the plate-shaped magnet detects the direction and the amount of rotation and, if the push button is pushed, the push button switch is operated.
In this case, the operation dial is placed above the printed circuit board, but it is not necessary that the operation dial is placed immediately thereabove. For example, as in an embodiment which will be described later, an operation tool 50 can exist on the printed circuit board 20 and the operation dial 70 can be supported on the operation tool 50. Further, although the operation dial 70 is supported on the operation tool 50 in the embodiment which will be described later, but other methods for supporting the operation dial can be employed.

### EFFECTS OF THE INVENTION

According to the present invention, the plate-shaped magnet having at least a pair of magnetic poles evenly divided radially, and the magnetic-field detection device having the plural magnetic-field detection sensors evenly placed therein are placed on the same axis, which enables detecting the direction and the amount of the rotation of the operation dial. Accordingly, there is no need for placing two magnetic-field detection devices as in the conventional example, thereby saving the number of components and placement spaces. Further, there is no need for using an annular magnet having a larger diameter, and the plate-shaped magnet can be laid out at the center in a compact manner. This increases the degree of flexibility in designing and also enables provision of a smaller-size operation input device having a smaller bottom area. Further, there is no need for using an annular magnet as in the conventional example, thereby providing an operation input device which is easy to product with reduced costs.
Further, the push button is rotated together with the operation dial at the center of the operation dial and also can move upwardly and downwardly independently, which enables rotation detection as described above and also enables operating the push button independently, thereby improving the operability and enabling various types of operations.

In an embodiment of the present invention, the magnetic-field detection device can be provided below the printed circuit board.

In the present embodiment, the space below the printed circuit board can be effectively utilized, which can eliminate the space for mounting the magnetic-field detection device above the upper surface of the printed circuit board, thereby further reducing a thickness of the portion of the operation input device which is exposed to the outside.

An electronic device according to the present invention is structured to incorporate the operation input device in such a way that the operation dial is exposed such that it can be operated from the outside.

According to the present invention, the small-size operation input device which is easy to product is employed, which enables provision of an electronic device with a smaller thickness. Further, the magnetic-field detection device can be provided below the printed circuit board. Therefore, when the operation input device is mounted in the housing of an electronic device, it is possible to utilize effectively the dead space below the printed circuit board within the housing, thereby offering the advantage of further reducing a thickness of the electronic device, in comparison with the conventional example.

### BRIEF DESCRIPTION OF THE DRAWINGS

Fig. 1 A and Fig. 1 B are a perspective view and a main-part perspective view of a cellular phone incorporating an operation input device according to the present invention.
Fig. 2 is an enlarged main-part perspective view of the operation input device illustrated in Fig. 1 B.
Fig. 3A and Fig. 3B are partial cross-sectional views of the operation input device illustrated in Fig. 2.
Fig. 4 is an exploded perspective view of the operation input device illustrated in Fig. 2, when viewed from above.
Fig. 5 is an exploded perspective view of the operation input device illustrated in Fig. 2, when viewed from below.
Fig. 6A and Fig. 6B are plan views illustrating the magnetic poles in different magnets.
Fig. 7 is a plan view illustrating the placement of magnetic-field detection sensors in a magnetic-field detection device illustrated in Fig. 3 to Fig. 5.

### DESCRIPTION OF REFERENCE CHARACTERS

1: Cellular Phone
2: Operation Input Device
10: Metal Base
11 a and 11b: Jig Holes
12 and 13: Elastic Engagement Receiving Portions
14 and 15: Fixture Tongue Pieces
14a and 15a: Fixture Holes
16 and 17: Positioning Tongue Pieces
16a and 17a: Positioning Holes

20: Printed Circuit Board
21 to 25: Push Button Switches
26a and 26b: Jig Holes

30: Push Button
31: Pull-out Preventing Annular Rib
32: Engagement Protrusion
33: Pushing Protrusion
34: Disk-shaped Magnet

40: Fixture Ring
41: Positioning Hole
42: Caulking Hole

50: Operation Tool
51: Metal Ring
52 and 53: Elastic Engagement Portions
52a: Rectangular Hole
53a: Long Hole
58: Pedestal Portion
59a to 59d: Pushing Protrusions

60: Sliding Sheet

70: Operation Dial
71: Operation Hole
72: Slippage Preventing Protrusion
73: Annular Rib
74: Annular Slot
75: Positioning Protrusion
76: Caulking Protrusion
77: Annular Step Portion
78: Cutout Portion

### BEST MODE FOR CARRYING OUT THE INVENTION

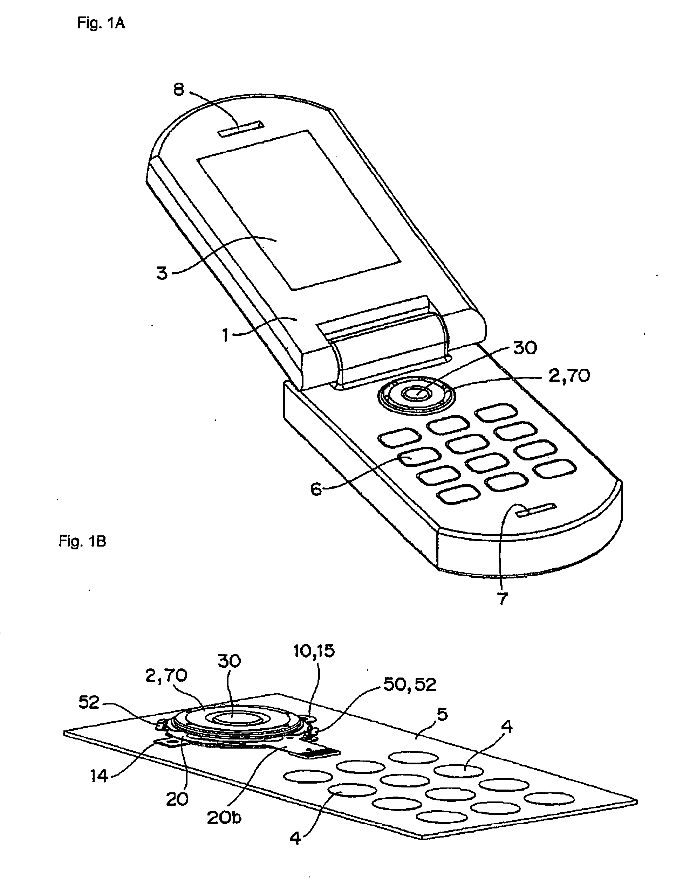

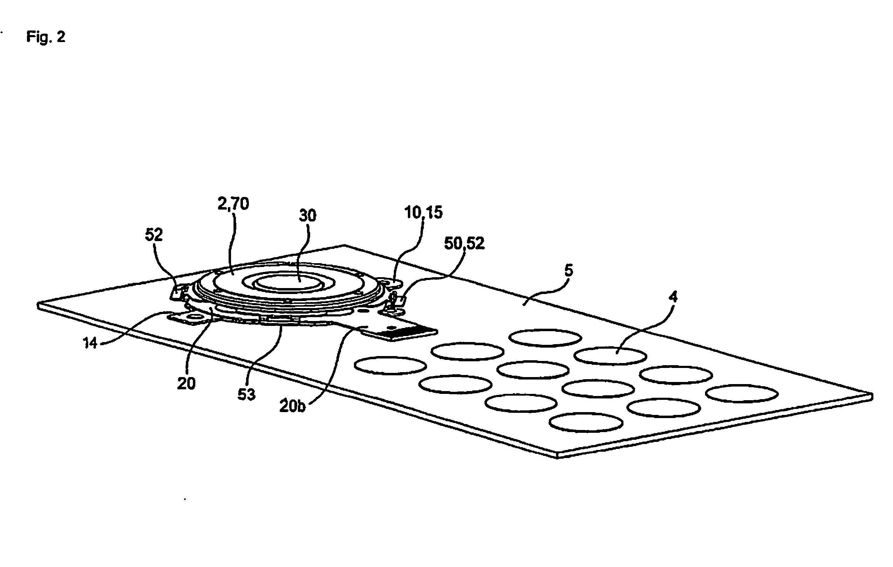

An embodiment of an operation input device according to the present invention will be described, with reference to the attached drawings in Figs. 1 to 7.
The operation input device according to the present embodiment is an operation input device 2 mounted on a printed circuit board 5 (Fig. 2) in a cellular phone 5 and enables scrolling a scroll bar (not illustrated) in a monitor 3 and generating selection commands through a push button 30 and the like, which will be described later. Further, 4 designates push button switches mounted on the printed circuit board 5, 6 designates ten keys, 7 designates a microphone, and 8 designates a speaker.

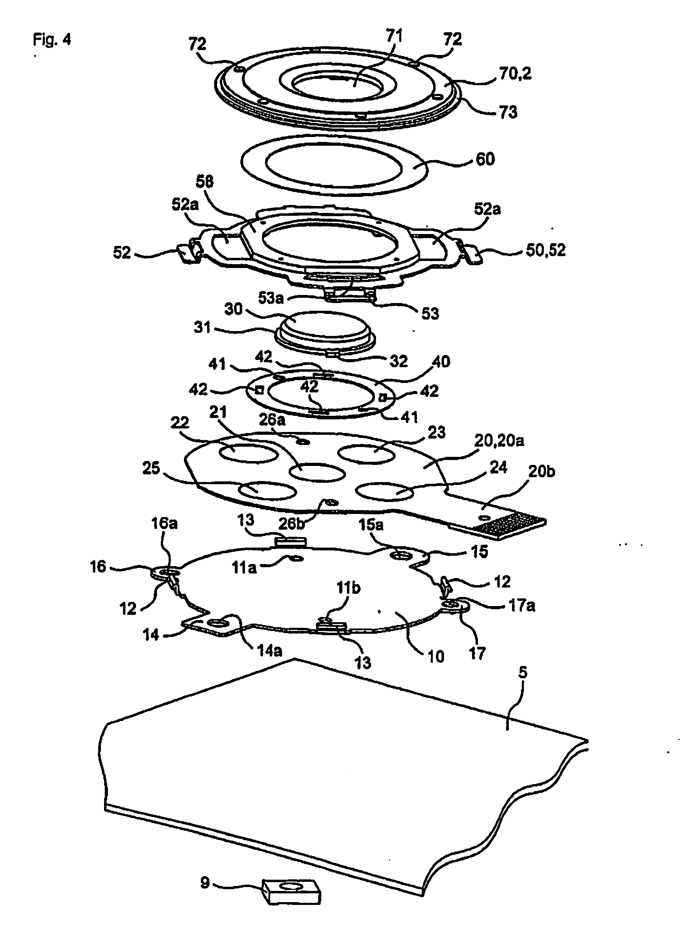

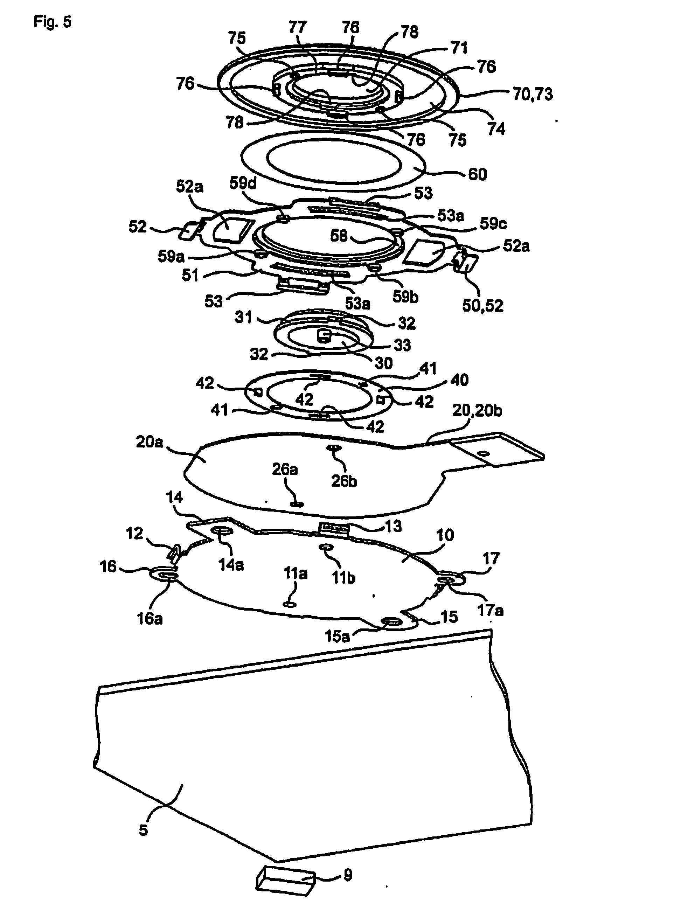

As illustrated in Fig. 4 and Fig. 5, the operation input device 2 is constituted by a magnetic-field detection device 9 mounted to a lower surface of the printed circuit board 5, a metal base 10, a printed circuit board 20 formed from a flexible resin film, the push button 30, a fixture ring 40, an operation tool 50, a sliding sheet 60, and an operation dial 70.

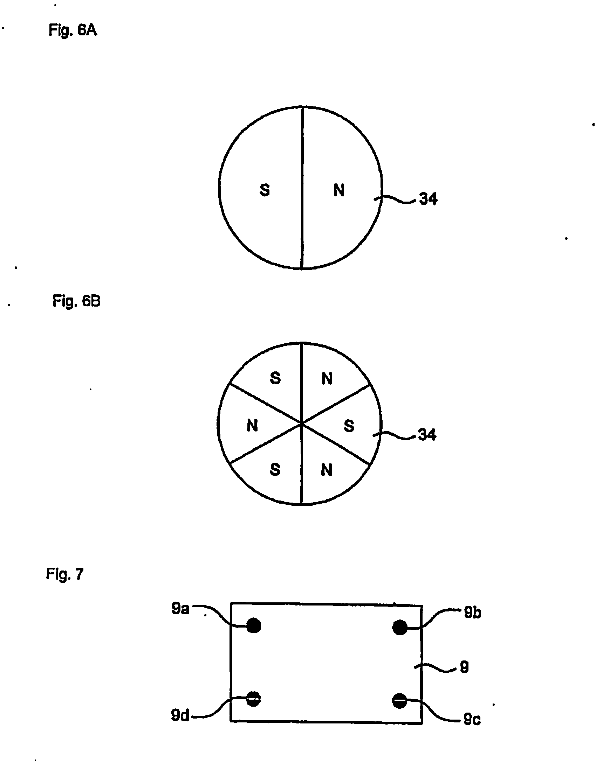

The magnetic-field detection device 9 includes, for example, four magnetic-flux detection sensors 9a, 9b, 9c and 9d which are placed at the corner portions as illustrated in Fig. 7 and is secured and electrically connected to a back surface of the printed circuit board 5 positioned below the printed circuit board 20.

As illustrated in Fig. 4 and Fig. 5, the metal base 10 has substantially a circular planar shape and is provided with a pair of jig holes 11 a and 11 b which enable inserting thin-needle type jigs (not illustrated) therethrough across the center of the metal base 10. Further, the metal base 10 is provided with a pair of first elastic engagement receiving portions 12, 12 which are raised at the outer peripheral edge portion such that they are opposed to each other across the center line connecting the jig holes 11 a and 11 b to each other. Further, the metal base 10 is provided with a pair of second elastic engagement receiving portions 13, 13 which are raised at the outer peripheral edge portion such that they are opposed to each other across the center line connecting the elastic engagement receiving portions 12, 12 to each other. Further, the metal base 10 is provided with fixture tongue pieces 14 and 15 and positioning tongue pieces 16 and 17 which are laterally extended from the outer peripheral edge portion between the elastic engagement receiving portions 12 and 13. The fixture tongue pieces 14 and 15 are provided with fixture holes 14a and 15a, respectively. The positioning tongue pieces 16 and 17 are provided with positioning holes 16a and 17a, respectively.

The printed circuit board 20 formed from a flexible resin film has substantially the same planer shape as that of the metal base 10 and also is formed from a board main body 20a having substantially a circular shape which is provided with an adhesive material at a back surface of the printed circuit board 20 and is covered with a release sheet, and a lead portion 20b extending from the board main body 20a. On the board main body 20a, there is placed a flat center push button switch 21 at a center portion of the board main body 20a, and, also, there are placed four flat push button switches 22 to 25 at opposite positions across the center push button switch 21. Further, the board main body 20a is provided with jig holes 26a and 26b at opposite positions across the center push button switch 21.

Further, the printed circuit board 20 on which the push button switches 21 to 25 are mounted is covered with a resin film cover, not illustrated, over the entire front and back surfaces of the printed circuit board 20, except the jig holes 26a and 26b. Thus the insulation characteristic of the printed circuit board 20 is enhanced. However, for convenience of description, there is not illustrated the resin film cover, in Fig. 1 and Fig. 5.

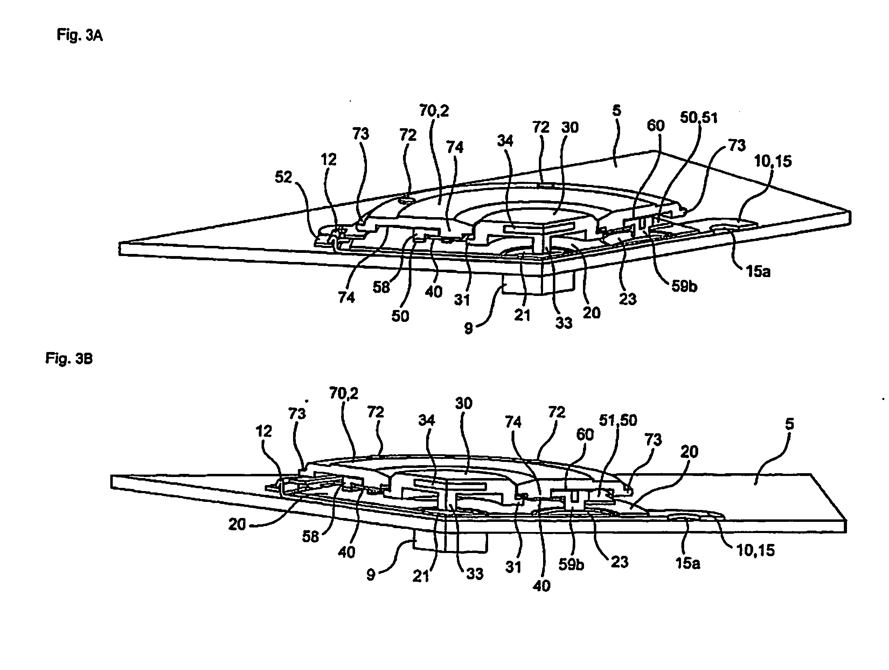

The push button 30 has an outer peripheral shape which can be inserted in the operation hole 71 of the operation dial 70, which will be described later, and also has a pull-out preventing annular rib 31 formed integrally with the outer peripheral lower end edge portion of the push button 30, as illustrated in Fig. 4 and Fig. 5. Further, the push button 30 is provided with a pair of engagement protrusions 32, 32 (Fig. 5) which are engaged with cutout portions 78, 78 in the operation dial 70, which will be described later, on an outer peripheral surface of the annular rib 31. Accordingly, the push button 30 is rotated integrally with the operation dial 70. Further, the push button 30 is provided with a pushing protrusion 33 protruded from the center of a bottom surface thereof. Further, the push button 30 has a disk-shaped magnet 34 provided therein through insert molding, as illustrated in Fig. 3. The disk-shaped magnet 34 has an even number of magnetic poles which are evenly and radially divided, as illustrated in Fig. 6A or Fig. 6B. Further, when the disk-shaped magnet 34 is rotated, the magnetic-flux sensors 9a to 9d embedded in the magnetic-field detection device 9 detect magnetic fluxes passing therethrough and, thus, detect the direction of rotation and the amount of rotation.

The fixture ring 40 is for preventing the operation dial 70 from being disengaged from the operation tool 50 which will be described later such that the operation dial 70 is rotatable, by fitting positioning protrusions 75 (Fig. 5) provided on a lower surface of the operation dial 70 into positioning holes 41 in the fixture ring 40 and, also, by securing, through caulking, caulking protrusions 76 on the operation dial 70 to caulking holes 42 in the fixture ring 40.

The operation tool 50 is formed by forming a resin pedestal portion 58 having substantially an annular shape integrally with a metal ring 51 having substantially a circular planar shape. The metal ring 51 has a pair of elastic engagement portions 52 with rectangular holes 52a extending from opposite outer peripheral edge portions and also has a pair of elastic engagement portions 53 with long holes 53a. Further, at the positions on a back surface of the metal ring 51 which correspond to the push button switches 22 to 25, pushing protrusions 59a to 59d made of resin are protruded from the pedestal portion 58. The pedestal portion 58 is formed to have an inner diameter smaller than the outer diameter of the fixture ring 40. Further, the metal ring 51 is formed to have an inner diameter larger than the outer diameter of the fixture ring 40. Further, as illustrated in Figs. 3A and 3B, an inner peripheral surface of the pedestal portion 58 is contacted with an outer peripheral surface of an annular step portion 77 of the operation dial 70 which will be described later and, during rotation of the operation dial 70, the inner peripheral surface of the pedestal portion 58 is slid against the outer peripheral surface of the annular step portion 77. The pedestal portion 58 has excellent slidability since it is made of a resin.

As described above, the operation tool 50 is constituted by the metal portion and the resin portion formed integrally with each other, which can ensure preferable rigidity with the metal portion while ensuring preferable slidability with the resin portion, even if the thickness is reduced. Namely, the operation tool 50 can have both rigidity and slidability required for a rotational-member holding member.
Further, the method for integrating the metal ring 51 and the pedestal portion 58 with each other can be integral molding, adhering or fitting.

Further, as illustrated in Fig. 5, the outer edge portions of the pushing protrusions 59a to 59d are positioned between the elastic engagement portions 52 and the elastic engagement portions 53 of the metal ring 51 which are adjacent to each other, and there is no protrusion in the metal portion. This is for preventing the pushing protrusions 59a to 59d from being hindered from pushing the push button switches 22 to 25 due to contact of such a protrusion with the push button switches 22 to 25, when the operation tool 50 is inclined since the operation dial 70 is downwardly pushed.

Also, the pushing protrusions 59a to 59d can be either made of a resin formed integrally with the pedestal portion 58 or made of a material different from that of the pedestal portion 58, namely a material other than a resin. Also, the pushing protrusions 59a to 59d can be provided either on the pedestal portion 58 as described above or on the metal ring 51.

The sliding sheet 60 has a concentric circular shape capable of covering an upper surface of the pedestal portion 58 of the operation tool 50 and is formed from a resin member with a predetermined friction coefficient.

The operation dial 70 is provided, at its center, an operation hole 71 in which the push button 30 is fitted, also is provided with slippage preventing protrusions 72 radially with an even pitch at the periphery of an upper surface of the operation dial 70 and also is provided with a pull-out preventing annular rib 73 at the outer peripheral edge portion. The pull-out preventing annular rib 73 is used for preventing the operation dial 70 from being disengaged from the cabinet of an electronic device such as a cellular phone. Further, as illustrated in Fig. 5, in the lower surface of the operation dial 70, an annular slot 74 is formed in a concentric circular shape. Further, on the annular step portion 77 provided near the edge portion of the opening in a lower surface of the operation hole 71, there are provided the positioning protrusions 75 for positioning the fixture ring 40 and the caulking protrusions 76 for calking fixture, in a concentric circular shape. Further, in the inner peripheral edge portion of the annular step portion 77, there are provided the cutout portions 78, 78 corresponding to the engagement protrusions 32, 32, in order to enable engaging the push button 30 therewith integrally. Through the engagement therebetween, if the operation dial 70 is rotated, the push button 30 is also rotated together with the operation dial 70. Further, it is not necessary that the operation dial 70 has a circular shape and can have, for example, a regular octagon shape, provided that it is rotatable.

Next, there will be described the processes for assembling the aforementioned components.
First, the magnetic-field detection device 9 is mounted and electrically connected to the back surface of the printed circuit board 5. On the other hand, a pair of thin-needle type jigs, which are not illustrated, are inserted into the jig holes 11 a and 11 b in the metal base 10 to perform positioning. Further, the front and back surfaces of the printed circuit board 20 on which the push button switches 21 to 25 have been mounted at predetermined positions, except the jig holes 26a and 26b, are covered with a resin film cover which is not illustrated. Further, the thin-needle type jigs are inserted into the jig holes 26a and 26b in the printed circuit board 20 to perform positioning, and the printed circuit board 20 is attached to the metal base 10 so that they are integrated.

Next, the sliding sheet 60 is placed on a bottom surface of the annular slot 74 in the operation dial 70. Further, the sliding sheet 60 is fitted to the bottom surface of the annular slot 74 in the operation dial 70 and the pedestal portion 58 of the operation tool 50 such that the sliding sheet 60 is sandwiched therebetween. Then, the positioning protrusions 75 on the operation dial 70 are fitted into the positioning holes 41 in the fixture ring 40 to perform positioning, and the caulking protrusions 76 are inserted into the caulking holes 42 in the fixture ring 40 to perform caulking. Consequently, the operation tool 50 and the sliding sheet 60 are sandwiched between the operation dial 70 and the fixture ring 40 and, also, the operation dial 70 is rotatably supported by the operation tool 50 with the sliding sheet 60 interposed therebetween.

Subsequently, the push button 30 is positioned on the push button switch 21 on the printed circuit board 20 and, further, the engagement protrusions 32, 32 on the push button 30 are engaged with the cutout portions 78, 78 in the operation dial 70, respectively. Further, the elastic engagement portions 52, 52 and the elastic engagement portions 53, 53 of the operation tool 50 are engaged with the elastic engagement receiving portions 12, 12 and the elastic engagement receiving portions 13, 13 of the metal base 10 and, thus, the assembling operation is completed.

In the present embodiment, the operation tool 50 itself is secured to the base 10 such that the operation tool 50 can not be rotated. Further, when the operation dial 70 is pushed downwardly, the pushing protrusions 59a to 59d on the operation tool 50 push the push button switches 22 to 25 downwardly, thereby performing the pushing operation function. On the other hand, when the operation dial 70 assembled rotatably to an upper surface of the operation tool 50 is rotated, the rotating operation function is performed.

Further, in the present embodiment, the elastic engagement portions 52 and 53 of the operation tool 50 are engaged with the elastic engagement receiving portions 12 and 13 of the base 10, respectively, which prevents rattles in the horizontal direction. Further, the operation tool 50 is biased upwardly by the spring forces of the push button switches 22 to 25, which prevents rattles in the upward and downward directions. Further, the friction force induced between the operation dial 70 and the sliding sheet 60 prevents the operation dial 70 from being excessively rotated by inertial forces, which offers the advantage of suppressing the occurrence of false operations.

Further, the magnetic-field detection device 9 is mounted to the lower surface of the printed circuit board 5 which is positioned below the printed circuit board 20, which enables effective utilization of a dead space within the housing of the cellular phone. This eliminates the necessity of providing a space for mounting the magnetic-field detection device 9 above an upper surface of the printed circuit board 5, thereby enabling further reduction of a thickness of the portion of the operation input device 2 above the printed circuit board 5. Further, it is necessary to mount only the single magnetic-field detection device 9 on the printed circuit board 5, which reduces the number of assembling processes, thereby increasing the productivity. Further, since the magnet 34 has a simple disk shape, not an annular shape, which offers the advantage of ease of production.

Next, there will be described a method for operating the cellular phone 1 which incorporates the operation input device 2 having the aforementioned structure.
If the operation dial 70 incorporated in the cellular phone 1 is rotated, the push button 30 is rotated integrally therewith. Consequently, the magnet 34 formed in the push button 30 through insert molding is rotated, and the magnetic-field detection device 9 detects the change of magnetic fluxes and, on the basis thereof, detects the direction and the amount of rotation.

Further, the result of the detection is reflected on the movement of the scroll bar (not illustrated) in the screen displayed on the monitor 3, through a control circuit, which is not illustrated. Then, when the scroll bar reaches a desired position, if the push button 30 is pushed, this causes the pushing protrusion 33 to operate the center push button switch 21, thereby generating a selection command.

Also, if a peripheral portion of the operation dial 70, such as the pushing protrusion 59b as illustrated in Fig. 3B, is pushed downwardly, a reverse spring in the push button switch 23 positioned beneath the pushing protrusion 59b can be reversed for establishing conduction therethrough.
Further, while, in the aforementioned embodiment, the engagement protrusions 32, 32 and the cutout portions 78, 78 are employed for causing the push button 30 and the operation dial 70 to rotate integrally with each other, the present invention is not limited to the aforementioned example. For example, the push button 30 and the operation hole 71 in the operation dial 70 can be formed to have polygonal shapes coincident to each other, in order to cause the push button 30 and the operation dial 70 to rotate together with each other.
Further, while, in the aforementioned embodiment, the magnetic-field detection device 9 is mounted to the lower surface of the printed circuit board 5, the present invention is not limited to the aforementioned example, and the magnetic-field detection device 9 can be mounted to the upper surface of the printed circuit board 5 when there is a redundant space.

Also, an elastic pad can be placed between an upper surface of the printed circuit board 20 and a lower surface of the operation tool 50 for biasing the operation tool 50 upwardly, in order to prevent rattles.

Further, the push button 30 can be formed integrally with the operation dial 70, not separately therefrom.

### INDUSTRIAL APPLICABILITY

The operation input device according to the present invention can be applied to other mobile apparatuses and other electronic devices, as well as to cellular phones, as a matter of cause.

## Claims

1. An operation input device comprising a printed circuit board having at least one single push button switch mounted on an upper surface of the printed circuit board, an operation dial supported rotatably about a rotation axis above the printed circuit board, a push button which is rotated at the center of the operation dial integrally with the operation dial and is movable upwardly and downwardly independently, a plate-shaped magnet with at least a pair of magnetic poles evenly and radially divided which is included in the push button and placed on an axis coincident with the rotation axis, and a magnetic-field detection device provided below the push button such that plural magnetic-field detection sensors therein are evenly placed about the rotation axis,
wherein, if the operation dial is rotated, the magnetic-field detection device for detecting magnetic fluxes from the plate-shaped magnet detects the direction and the amount of rotation and, if the push button is pushed, the push button switch is operated.

2. The operation input device according to Claim 1, wherein
the magnetic-field detection device is provided below the printed circuit board.

3. An electronic device incorporating the operation input device according to Claim 1 or 2 in such a way that the operation dial is exposed such that the electronic device can be operated from the outside.
